# EUROPEAN PATENT SPECIFICATION

(11) **EP 1 643 859 B1**
(45) Date of publication and mention of the grant of the patent: **04.11.2015**
(21) Application number: 04739895.3
(22) Date of filing: 07.06.2004
(51) Int. Cl.: A23L 1/212, A23L 1/064, A23B 7/005

(54) **METHOD FOR MAKING A STABIIZED FRUIT PULP COMPOSITION AND OF A PUREE COMPOSITION COMPRISING THE SAME**
VERFAHREN ZUR HERSTELLUNG EINER STABILISIERTE FRUCHTPULPE UND EINES DIESE ENTHALTENDES PÜREES
PROCEDEE DE PREPARATION D'UNE PULPE DE FRUIT STABILISEE ET D'UNE PUREE LA CONTENANT

(30) Priority: 23.06.2003 EP 03253938; 16.12.2003 EP 03257912
(43) Date of publication of application: 12.04.2006
(73) Proprietor: Unilever N.V., 3013 AL Rotterdam (NL); Unilever PLC, London EC4Y 0DY (GB)
(72) Inventor: BARRACLOUGH, Anthony, John Unilever R & D Colworth, Northampfonshire NN14 1SX (GB); MEEUSE, Frederik, M., Unilever R & D Vlaardingen, 3133 AT Vlaardingen (NL); WIERINGA, Jan, Alders, Unilever Bestfoods Polska, Poznan (PL)
(74) Representative: van Benthum, Wilhelmus A. J.
(86) International application number: PCT/EP2004/006424
(87) International publication number: WO 2004/112502

(56) References cited:
- EP-A- 0 429 966
- EP-A- 0 850 572
- WO-A-2004/037017
- DE-B- 1 101 118
- FR-A- 2 294 649
- FR-A- 2 621 224
- US-A- 4 139 647
- US-A- 4 413 017
- US-A- 5 298 275
- US-A- 5 871 794
- US-A- 5 879 737
- US-A- 5 900 267
- US-A1- 2002 068 125
- US-A1- 2002 197 385
- DATABASE FSTA [Online] INTERNATIONAL FOOD INFORMATION SERVICE (IFIS), FRANFURT/MAIN, DE; KARIM M A ET AL: "Effect of heat processing on the quality of canned mango pulp." XP002262296 Database accession no. 72-2-04-j0564 & PAKISTAN JOURNAL OF SCIENTIFIC RESEARCH 1970 DEPT. OF FOOD TECH., AGRIC. UNIV., LYALLPUR, W. PAKISTAN, vol. 22, no. 1/2, 1970, pages 44-50,
- DATABASE FSTA [Online] INTERNATIONAL FOOD INFORMATION SERVICE (IFIS), FRANFURT/MAIN, DE; CARVALLO P M S ET AL: "Formulation of an avocado paste product." XP002262297 Database accession no. 84-2-09-j1551 & ALIMENTOS FAC. DE INGENIERIA, GENERAL CRUZ NO. 34, VALPARAISO, CHILE, vol. 8, no. 4, 1983, pages 9-14,
- DATABASE FSTA [Online] INTERNATIONAL FOOD INFORMATION SERVICE (IFIS), FRANFURT/MAIN, DE; MARTIN Z DE ET AL: "Industrial production of guava pulp, red variety." XP002262298 Database accession no. 76-1-05-j0655 & COLETANEA DO INSTITUTO DE TECNOLOGIA DE ALIMENTOS, vol. 6, no. 1, 1975, pages 11-36,
- DATABASE FSTA [Online] INTERNATIONAL FOOD INFORMATION SERVICE (IFIS), FRANFURT/MAIN, DE; RODRIGUEZ A J ET AL: "Evaluation of papaya nectar prepared from unpeeled papaya puree." XP002262299 Database accession no. 72-2-10-j1593 & JOURNAL OF AGRICULTURE OF THE UNIVERSITY OF PUERTO RICO FOOD TECH. LAB., AGRIC. EXPT. STA., MAYAGÜEZ CAMPUS, UNIV. OF PUERTO RICO, USA, vol. 56, no. 1, 1972, pages 79-80,
- DATABASE FSTA [Online] INTERNATIONAL FOOD INFORMATION SERVICE (IFIS), FRANFURT/MAIN, DE; WILLS R B H ET AL: "Storage of two new cultivars of guava fruit for processing." XP002262300 Database accession no. 83-3-12-j1934 & TROPICAL AGRICULTURE SCHOOL OF FOOD TECH., UNIV. OF NEW SOUTH WALES, PO BOX 1, KENSINGTON, NSW 2033, AUSTRALIA, vol. 60, no. 3, 1983, pages 175-178,
- DATABASE BIOSIS [Online] BIOSCIENCES INFORMATION SERVICE, PHILADELPHIA, PA, US; 1987, SEYMOUR G B ET AL: "INHIBITION OF DEGREENING IN THE PEEL OF BANANAS RIPENED AT TROPICAL TEMPERATURES I. EFFECT OF HIGH TEMPERATURE ON CHANGES IN THE PULP AND PEEL DURING RIPENING" XP002262301 Database accession no. PREV198784003621 & ANNALS OF APPLIED BIOLOGY, vol. 110, no. 1, 1987, pages 145-152, ISSN: 0003-4746

## Description

### FIELD OF THE INVENTION

The present invention is directed to a method for making a stabilized fruit pulp composition comprising chunks of said fruit as well as a stable puree composition comprising the same. More particularly, the invention is directed to a method for making a stabilized fruit pulp composition comprising chunks of said fruit, wherein said pulp composition has not been subjected to chemical treatment, high vacuum processing and temperatures over about 90°C. The stabilized fruit pulp composition of the present invention unexpectedly has an extended shelf life at about ambient temperature, may be added to a thickening base to produce a stable puree composition having a viscosity of at least about 5,000 centipoise, and is suitable for human consumption.

### BACKGROUND OF THE INVENTION

Consumption of nutrients, like antioxidants and folic acid, which are abundant in fruits and vegetables, has been linked to a lower incidence of cardiovascular disease. Moreover, it is well settled that eating fruits high in soluble fiber can reduce cholesterol levels which protects against atherosclerosis.

Other advantages of having a diet high in fruit include better athletic performances, reduced risk of developing chronic bronchitis, a lowered risk of getting most common cancers (including breast cancer), as well as a lowered risk of getting cataracts.

While food products, like dressings, dips and spreads, comprising fruits have been linked to health benefits in humans, such products are often difficult to prepare for sale in commerce. This is true because the quality of food products comprising fruit often deteriorates (e.g., browns, darkens, grows mold and/or changes or reduces flavor) due to enzymatic reactions within the food product, thereby resulting in a product that has a short shelf life and does not have an appealing look or taste after spending a limited period of time in conventional commercial channels.

Known techniques have been used to inhibit the deterioration of food products comprising fruits. These known techniques include pasteurization of the fruit, high vacuum processing for removing oxygen, and chemically treating the fruit with sulfiting agents before making the food product. The above-described known techniques do not eliminate, for example, browning and darkening in food products comprising fruit, and such techniques have adverse effects on the flavor, aroma, texture and nutritional value of the fruits treated, as well as the food products prepared therefrom.

Also, such techniques and conventional food processing techniques often lead to products which do not have good texture and/or which feel soft or mushy in the mouth when eaten. This is not always a texture or mouthfeel which is desired by consumers.

It is of increasing interest to develop a stabilized fruit pulp composition and a stable puree composition (i.e., food product) that does not, for example, easily brown, darken and changes or reduces flavor and that has an extended shelf life at about ambient temperature. It is also of increasing interest to develop a stabilized fruit composition that has good organoleptic properties e.g. mouthfeel and which has a good texture. In particular, it is of increasing interest to develop a composition which does not feel too soft or mushy in the mouth and in which the consumer can detect distinct pieces of fruit but which pieces at the same time are not undesirably large. This invention, therefore, is directed to a stabilized fruit pulp composition that has not been subjected to chemical treatment, high vacuum processing and temperatures over about 90°C. The stabilized fruit pulp composition of this invention can be used to make a stable puree composition having a viscosity of at least about 5,000 centipoise. Moreover, the stabilized fruit pulp composition of this invention and the stable puree composition prepared therefrom unexpectedly have an extended shelf life at about ambient temperature and substantially the same visual, texture, aroma and taste attributes of a pulp composition and puree composition made on demand from freshly picked fruits.

### ADDITIONAL INFORMATION

Efforts have been disclosed for making fruit pump. In U.S. Patent No. 5,384,147, a method for processing avocado pulp is described.

Other efforts have been disclosed for making stabilized fruit. In U.S. Patent No. 5,871,794, a guacamole composition with tomatillo pulp is described.

Still other efforts have been disclosed for making creamy food formulations. In U.S. Patent No. 6,284,303, a vegetable based creamy food is described.

None of the additional information above describes a stabilized fruit pulp that has not been subjected to chemical treatment, high vacuum processing and temperatures that exceed about 90°C.

WO 2004/037017 (relevant under Art 54(3) EPC only) discloses stabilized fruit pulp compositions and a puree composition being produced without chemical treatment, high vacuum processing and temperatures that exceed 90°C. The size of the fruit pulp pieces is however not disclosed.

### SUMMARY OF THE INVENTION

>

In a first aspect, the present invention is directed to a method for making a stabilized fruit pulp composition comprising the steps of:
(a) harvesting fruit 1 to 4 weeks prior to being ripe;
(b) storing the harvested fruit in a dark room at a temperature from 10°C to 35°C for less than 1.5 weeks;
(c) in no particular order, peeling, depitting or coring, if necessary, the fruit and cutting or mashing the fruit to produce fruit pulp, the pulp comprising chunks having dimensions of from 1x1x1 mm to 15x15x15 mm;
(d) mixing the fruit flesh with 0.01 to 5.0% by weight acidulant to produce an acidulant and fruit flesh mixture;
(e) heating the acidulant and fruit flesh mixture to a temperature not over 90°C for less than 4 minutes,
wherein the fruit has a hardness factor of at least 300 dynes prior to heating.

Preferably the fruit is avocado, banana, mango, guava, fig, papaya, kiwi, star fruit, pineapple or a mixture thereof, preferably the fruit comprises avocado.

Preferably the stabilized fruit pulp composition comprises from 50.0 to 99.0% by weight water; fruit pulp ; 0.1 to 40.0% by weight oil; substantially no quality detrimental enzyme activity after heating.

The stabilized fruit pulp composition preferably comprises from 75.0 to 99.0% by weight water; fruit pulp; 0.1 to 20.0% by weight oil.

In a second aspect, the present invention is directed to a method for making a stable puree composition, comprising the step of adding the stabilized fruit pulp composition prepared according to the first aspect of the invention to a composition comprising a thickening base to produce a stable puree composition.

Preferably the stable puree comprises:
a) from 20.0% to 95.0% by weight water;
b) from 0.01 to 10.0% by weight thickening base ; and
c) from 1 to 75.0% by weight stabilized fruit pulp composition comprising chunks, said chunks having dimensions of from 1x1x1 mm to 15x15x15 mm,
wherein the puree composition has a viscosity from 18 to 30 Pa·s (18,000 to 30,000 centipoise), and a shelf life at about ambient temperature of at least 65 days.

Preferably the stable puree comprises:
a) from 20.0% to 95.0% by weight water;
b) from 0.01 to 10.0% by weight thickening base ; and
c) from 1 to 75.0% by weight stabilized fruit pulp composition comprising chunks, said chunks having dimensions of from 1x1x1 mm to 15x15x15 mm,
wherein the puree composition has a viscosity from 5 to 90 Pa·s (5,000 to 90,000 centipoise), and a shelf life at about ambient temperature of at least 65 days; and wherein the composition has a pH from at least 3.0 to less than or equal to 7.0.

Fruit, as used herein, means the ripening part of a plant and usually the seed bearing part of a plant. Fresh and/or frozen fruit may be used. Oil means naturally occurring triglycerides and their derivatives found in (i.e., originating in) the stabilized fruit pulp composition.

Stabilized (or stable) means substantially no mold growth, browning, darkening and flavor change or reduction for at least about 65 days, and preferably, for at least about 85 days when kept in a covered (i.e., sealed) package at about ambient temperature.

Puree is defined to mean a composition comprising stabilized fruit pulp composition and thickening base whereby the composition can be used, for example, as a dressing, dip, spread, baking additive, cooking additive, or any combination thereof.

Thickening base is defined to mean an.agent that can be flavored and colored to mimic most characteristics of the stabilized fruit pulp composition and aid in viscosity maintenance of the stable puree composition prepared therefrom.

Viscosity, as used herein, means deformation properties obtained with a Haake Rheometer equipped with a set of concentric, bob-in-cup, cylinders (3mm gap) wherein the bob employed has a diameter of 30.4mm, the cup has a diameter of 42mm, and shearing occurs by ramping cylinder oscillation at a rate from 0 to 135 reciprocal seconds at ambient temperature. Viscosity reported is taken at a shear rate of 10 reciprocal seconds.

Hardness factor, as used herein, means the hardness value obtained on a 4 mm thick slice of fruit (using a TA-TX2 Texture Analyzer made available by SMS Stable Micro Systems) at ambient temperature being subjected to compression using a 50 kg load cell moving at 1mm/sec, with the hardness factor being determined from the observed first peak in a force distance curve.

The invention is as defined in the appended claims.

### DETAILED DESCRIPTION OF THE PREFERRED EMBODIMENTS

There is no limitation with respect to the type of fruit that may be used to make the stabilized pulp composition and stable puree composition of the present invention, as long as the fruit is one that is suitable for human consumption. Often, the fruit used in this invention is an avocado, banana, mango, guava, fig, papaya, kiwi, star fruit, pineapple, combination thereof, or the like. In a most preferred embodiment, the fruit employed in this invention is avocado.

When selecting the fruit to make the stabilized fruit pulp composition and stable puree composition of this invention, the fruit is picked from 1 to 4 weeks, and preferably, from 1 to 3 weeks, and most preferably, from 2 to 3 weeks prior to being ripe. The picked fruit is then stored in a dark room (at a temperature between 10°C to 35°C) for less than 1.5 weeks, and preferably, less than 1 week, and most preferably, less than 3 days. In an especially preferred embodiment, the fruit selected for use in this invention, after being picked or harvested, is subjected to storage conditions of relative humidity between 40-70%, and most preferably, between 50-65%.

When preparing the fruit selected for use in this invention, the fruit is, in no particular order, peeled and depitted or cored, if necessary. The resulting fruit flesh is then mashed to a desired texture or consistency to produce fruit pulp provided that chunks having the size according to the invention are present. Alternatively, the fruit is cut rather than mashed to produce chunks of the required size. It is preferred that the dimensions of the chunks are from 2x2x2 mm to 10x10x10 mm, preferably from 3x3x3 mm to 5x5x5 mm. In a preferred embodiment, the fruit pulp produced is prepared from fruit having a hardness factor from 300 dynes to 3,000 dynes. The fruit pulp is then heated (e.g., in a water bath, in an oven, microwave oven, in surface scraped heat exchangers, intube heat exchangers, by steam injection or with adiabatic heating in a high pressure vessel) to a temperature from 30°C to a temperature not over 90°C for less than 4 minutes, and preferably, from 10 seconds to 3.5 minutes, thereby producing a stabilized fruit pulp having from 0.01 to 20.0% (preferably at least 5.0% and most preferably at least 10.0%) by weight oil and substantially no active enzymes (i.e., all quality detrimental enzymes like amylase, lipoxyginase, polyphenol oxidase (PPO) are substantially inactivated).

The fruit pulp may comprise only the fruit chunks having the desired particle size, or, the pulp may comprise the aforementioned fruit chunks in combination with smaller or larger chunks. It is especially preferred that the fruit pulp comprises at least 20% by weight of the claimed chunks, preferably at 30-100% by weight, most preferably 40-90% by weight.

The acidulant is added to and mixed within the fruit pulp prior to heating. When acidulant is used, it typically makes up from 0.01 to 5.0% by weight of the fruit pulp being heated. The acidulant which may be used in this invention includes those which are typically used in food compositions, like lactic acid, citric acid, sorbic acid, hydrochloric acid, ascorbic acid, phosphoric acid, mixtures thereof, and the like.

There is no limitation with respect to the thickening base which may be used in this invention as long as the base is suitable for human consumption. Such a thickening base is typically a citrus fiber or vegetable puree (or mixture thereof) containing composition comprising water insoluble fibers. Therefore, the thickening base employable in this invention has food components derived from, for example, plant material that are generally resistant to digestion and absorption in the human small intestine. The thickening base can be, for example, sweetened or unsweetened applesauce, or sweetened or unsweetened cellulosic material derived from the core of an orange or other citrus fruits. Such a cellulosic material can comprise rag and small amounts of peel from the citrus fruit. Typically, the citrus fiber that makes up the thickening base of the present invention is substantially similar to or the same as the texturizing properties of the stabilized fruit pulp composition used to make the stable puree composition of this invention. Preferably, the citrus fiber within the thickening base, in dry form, has a particle size from 50 microns to 200 microns, including all ranges subsumed therein, and the types of thickening bases that may be used in this invention include those made commercially available from suppliers like Herbstreith & Fox, BASF Corporation and FMC Corporation.

When making the stable puree composition of the present invention, typically from 20.0 to 95.0%, and preferably, from 25.0 to 75.0%, and most preferably, from 50.0 to 65.0% by weight water is combined with from 0.01 to 10.0%, and preferably, from 0.01 to 7.5%, and most preferably, from 1.0 to 3.5% by weight thickening base, based on total weight of the stable puree composition and including all ranges subsumed therein. The resulting base combination is then mixed (preferably with conditions at ambient temperature and atmospheric pressure) to produce a base suspension.
The thickening base suspension and the fruit pulp comprising chunks may be stabilized by the heating step seperately, although, according to one preferred embodiment the thickening base and the fruit pulp comprising chunks are mixed together before the stabilisation step occurs so that they undergo the stabilisation step together.

Optional additives may be employed in this invention, and added, for example, to the base combination. The optional additives which may be used include artificial and natural food grade flavors and colors; protein powders like whey protein; preservatives like potassium sorbate and sodium benzoate; gums like pectin, xanthan gum and guar gum; emulsifiers like monoglycerides, diglycerides, and polysorbate; acids to modify pH like lactic acid and hydrochloric acid; spices like salt, ginger, nutmeg, basil, cinnamon, onion, garlic and pepper; and texturizing agents like microcrystalline cellulose (e.g., Avicel as made available by FMC Corporation).

While such optional additives may be added at anytime during the process for making the stable puree composition of this invention, they are preferably added to the base combination and just prior to generating the base suspension. In a preferred embodiment, however, when flavor is a desired optional additive, the flavor is added just prior to generating the puree composition of this invention. In yet another preferred embodiment, 5.0 to 10.0% by weight of the total water added to make the base suspension is added with the optional additives.

The flavors used in this invention may be added according to taste and the colors are added according to color preferences. The acids to modify pH are added to bring the pH of the stable puree composition to at least 3.0, but less than or equal to 4.1 during the heating step of the preparation process. The preferred amount of acid added to the base combination results in a stable puree composition having a pH from 3.3 to 4.0. After the acids have been added to bring the pH within the aforementioned pH range and the stabilisation step has taken place, the pH of the fruit pulp or fruit puree can be increased e.g. by adding an edible hydroxide such as sodium hydroxide. There are no pH restrictions for the final stabilized fruit pulp or stabilized fruit puree, provided that the pH thereof during the stabilisation step is in the range given herein. The emulsifiers and preservatives are added to enhance stability of the puree composition. The spices employed are added to taste, the gums are added to maintain a desired stable puree composition viscosity and the protein powders are added as desired. Generally, the amount of optional additives employed in the puree composition does not exceed 10.0% by weight of the total weight of the stable puree composition.

Subsequent to generating the base suspension, the same is subjected to a standard colloid mill having gap widths from 125 microns to 1250 microns, and preferably, from 250 microns to 750 microns, or a homogenizer operating under pressures from 3 to 30 MPa (30 to 300 bar). The resulting milled or homogeneous suspension is then combined with the claimed stabilized fruit pulp composition to produce the stable puree composition of this invention. The amount of stabilized fruit pulp composition employed is typically from 1.0 to 75.0%, and preferably, from 5.0 to 50.0%, and most preferably, from 10.0 to 25.0% by weight stabilized fruit pulp composition, based on total weight of the stable puree composition.

In an especially preferred embodiment, a fat additive may be added to the base suspension. Such a fat additive can be natural or synthetic and is a component delivered to the stable puree composition distinct from any oil delivered with the stabilized fruit pulp composition. The fat additive can be, for example, corn oil, cotton seed oil, olive oil, canola oil, palm oil, safflower oil, rapeseed oil, soybean oil, mixtures thereof and the like. The fat additive may also be a fat substitute such as fatty acid-esterified propoxylated glycerin compositions as well as sucrose fatty acid polyesters. When employed, the fat additive makes up from about 0.5 to about 25.0%, and preferably, from about 5.0 to about 20.0% by weight of the puree composition, based on total weight of the stable puree composition.

The stable puree composition of this invention is suitable for numerous food applications. For example, the composition may be used as a dressing, dip or spread, or as cooking or baking additive. Such a stable puree composition can be packaged in conventional food packaging (e.g., plastic or glass bottles) and hot filling (i.e., pasteurization) is not required to maintain product stability.

The following examples are provided to facilitate an understanding of the present invention. The examples are not intended to limit the scope of the invention as set forth in the claims.

### Example 1

Avocado, having a hardness factor of about 300 dynes, was harvested about 2.5 weeks prior to being ripe and stored in a dark room kept at about 25°C (relative humidity about 55%) for about two (2) days.

The avocado was cut in half and depitted to produce an avocado half. The avocado half was peeled, mashed so that it had a particle size of 3x3x3 mm and mixed with 0.5% by weight ascorbic acid and then heated to about 85°C for 3.0 minutes. The heated mashed avocado was cooled, thereby producing stabilized avocado pulp composition having about 15% by weight oil and 80.0% by weight water, with substantially no active polyphenol oxidase.

### Example 2

Avocado pulp was obtained from a commercial supplier. The avocado pulp was acidified to a pH of 4.3. The pulp was heated for 2 min at a temperature of 75C. The product was packed. After two days the pulp had turned brown and so the test was stopped.

### Example 3

Avocado pulp was obtained from a commercial supplier. The avocado pulp was acidified to a pH of 3.5. The pulp was heated for 2 min at a temperature of 75C. The product was packed. After about 65 days, the package was opened and no browning, darkening or mold formation was observed on the stable product composition of this invention.

### Example 4

A stable puree composition was made by the following process. Frozen avocado was cut into 3x3x3mm chunks at a temperature of about -10°C.

A base suspension was prepared by mixing the following ingredients:

| Ingredient | Weight % |
|---|---|
| Thickening Agent (Citrus Fiber) | 3.0% |
| Sunflower Oil | 4.0% |
| Polysorbate | 0.5% |
| Pectin | 0.3% |
| Potassium Sorbate | 0.1% |
| Water | Balance |

The resulting base composition was mixed to produce a base suspension. The base suspension was homogenized in a colloid mill.

The base and the avocado chunks were mixed in a 4:1 ratio on weight basis and the pH was adjusted to pH 3.7 at 20°C using hydrochloric acid. This product was heated in a surface scraped heat exchanger to about 75°C. It was kept at this temperature for about 2.7 min and subsequently cooled to about 30°C in a surface scrapped heat exchanger. The stable product was sealed in a package and kept at ambient temperature. After about 65 days, the package was opened and no browning, darkening or mold formation was observed on the stable product composition of this invention.

### Example 5

A base suspension was prepared by mixing the following ingredients:

| **Ingredient** | **Weight %** |
|---|---|
| Vegetable oil | 17.6 |
| Vegetable fat SBO 37 | 10.4 |
| Glucose | 8.18 |
| Fiber (Citrus fiber) | 3.9 |
| Salt | 2.03 |
| Sugar | 1.31 |
| Whey protein | 0.61 |
| Polisorbate 60 | 0.39 |
| Citric acid | 0.3 |
| Potassium sorbate | 0.3 |
| Emulsifier (monoestearate) | 0.22 |
| Xanthan gum | 0.13 |
| Lecithin | 0.11 |
| Pectin | 0.08 |
| EDTA | 0.01 |
| Water | balance |

The resulting base composition was mixed to produce a base suspension. The base suspension was homogenized in a colloid mill.

The base and the avocado chunks were mixed in a 4:1 ratio on weight basis and the pH was adjusted to pH 3.7 at 20°C using hydrochloric acid. This product was heated in a surface scraped heat exchanger to about 75°C. It was kept at this temperature for about 2.7 min and subsequently cooled to about 30°C in a surface scrapped heat exchanger. The stable product was sealed in a package and kept at ambient temperature. After about 65 days, the package was opened and no browning, darkening or mold formation was observed on the stable product composition of this invention.

The results of the experiments above indicate that pulps and puree compositions prepared via this invention, unexpectedly, have a superior shelf life.

## Claims

1. A method for making a stabilized fruit pulp composition comprising the steps of:
(a) harvesting fruit 1 to 4 weeks prior to being ripe;
(b) storing the harvested fruit in a dark room at a temperature from 10°C to 35°C for less than 1.5 weeks ;
(c) in no particular order, peeling, depitting or coring, if necessary, the fruit and cutting or mashing the fruit to produce fruit pulp, the pulp comprising chunks having dimensions of from 1x1x1 mm to 15x15x15 mm;
(d) mixing the fruit flesh with 0.01 to 5.0% by weight acidulant to produce an acidulant and fruit flesh mixture;
(e) heating the acidulant and fruit flesh mixture to a temperature not over 90°C for less than 4 minutes,
wherein the fruit has a hardness factor of at least 300 dynes prior to heating.

2. The method for making a stabilized fruit pulp composition according to claim 1, wherein the fruit is avocado, banana, mango, guava, fig, papaya, kiwi, star fruit, pineapple or a mixture thereof, preferably the fruit comprises avocado.

3. The method for making a stabilized fruit pulp composition according to either one of claims 1 or 2, wherein the stabilized fruit pulp composition comprises from 50.0 to 99.0% by weight water; fruit pulp ; 0.1 to 40.0% by weight oil; substantially no quality detrimental enzyme activity after heating.

4. The method according to claim 3, wherein the stabilized fruit pulp composition comprises from 75.0 to 99.0% by weight water; fruit pulp; 0.1 to about 20.0% by weight oil.

5. The method according to any one of the preceding claims, where the fruit is subjected to storage conditions of relative humidity between 40-70% before being heated.

6. The method according to any one of the preceding claims, wherein the chunks have dimensions of from 2x2x2 mm to 10x10x10 mm.

7. A method for making a stable puree composition, comprising the step of adding the stabilized fruit pulp composition prepared according to any one of the preceding claims to a composition comprising a thickening base to produce a stable puree composition.

8. The method according to claim 7, wherein the stable puree comprises:
a) from 20.0% to 95.0% by weight water;
b) from 0.01 to 10.0% by weight thickening base ; and
c) from 1 to 75.0% by weight stabilized fruit pulp composition comprising chunks, said chunks having dimensions of from 1x1x1 mm to 15x15x15 mm,
wherein the puree composition has a viscosity from 18 to 30 Pa·s (18,000 to 30,000 centipoise), and a shelf life at about ambient temperature of at least 65 days.

9. The method according to claim 7, wherein the stable puree comprises:
a) from 20.0% to 95.0% by weight water;
b) from 0.01 to 10.0% by weight thickening base ; and
c) from 1 to 75.0% by weight stabilized fruit pulp composition comprising chunks, said chunks having dimensions of from 1x1x1 mm to 15x15x15 mm,
wherein the puree composition has a viscosity from 5 to 90 Pa·s (5,000 to 90,000 centipoise), and a shelf life at about ambient temperature of at least 65 days; and wherein the composition has a pH from at least 3.0 to less than or equal to 7.0.

10. The method according to any of claims 7 to 9, wherein the stable puree composition is used as a dressing, dip, spread, cooking additive or baking additive.

11. The method according to any one of claims 7 to 10, wherein the stable puree composition further comprises food grade flavoring, food grade coloring, protein powder, preservative, emulsifier, acid, spices, texturizing agent or a mixture thereof.

## Patentansprüche

1. Verfahren zur Herstellung einer stabilisierten Fruchtpulpen-Zusammensetzung, umfassend die Schritte von:
(a) Ernten einer Frucht 1 bis 4 Wochen, bevor sie reif ist;
(b) weniger als 1,5 Wochen langes Lagern der geernteten Frucht in einem dunklen Raum bei einer Temperatur von 10°C bis 35°C;
(c) in keiner besonderen Folge Schälen, wenn nötig Entsteinen oder Entkernen der Frucht und Schneiden oder Zerdrücken der Frucht, um Fruchtpulpe herzustellen, wobei die Pulpe Klumpen mit Ausmaßen von 1x1x1 mm bis 15x15x15 mm umfasst;
(d) Mischen des Fruchtfleisches mit 0,01 bis 5,0 Gew.-% Säuerungsmittel, um eine Mischung aus Säuerungsmittel und Fruchtfleisch herzustellen;
(e) weniger als 4 Minuten langes Erwärmen der Mischung aus Säuerungsmittel und Fruchtfleisch auf eine Temperatur von nicht über 90°C,
wobei die Frucht vor dem Erwärmen einen Härtefaktor von mindestens 300 dyn aufweist.

2. Verfahren zur Herstellung einer stabilisierten Fruchtpulpen-Zusammensetzung gemäß Anspruch 1, wobei die Frucht Avocado, Banane, Mango, Guave, Feige, Papaya, Kiwi, Sternfrucht, Ananas oder eine Mischung davon ist, vorzugsweise umfasst die Frucht Avocado.

3. Verfahren zur Herstellung einer stabilisierten Fruchtpulpen-Zusammensetzung gemäß irgendeinem der Ansprüche 1 oder 2, wobei die stabilisierte Fruchtpulpen-Zusammensetzung 50,0 bis 99,0 Gew.-% Wasser, Fruchtpulpe, 0,1 bis 40 Gew.-% Öl und im Wesentlichen nach Erwärmen keine qualitätsvermindernde Enzymaktivität aufweist.

4. Verfahren gemäß Anspruch 3, wobei die stabilisierte Fruchtpulpen-Zusammensetzung 75,0 bis 99,0 Gew.-% Wasser, Fruchtpulpe, 0,1 bis etwa 20 Gew.-% Öl umfasst.

5. Verfahren gemäß irgendeinem der vorhergehenden Ansprüche, wobei die Frucht Lagerbedingungen von 40 bis 70% relativer Feuchtigkeit unterworfen wird, bevor sie erwärmt wird.

6. Verfahren gemäß irgendeinem der vorhergehenden Ansprüche, wobei die Klumpen Ausmaße von 2x2x2 mm bis 10x10x10 mm aufweisen.

7. Verfahren zur Herstellung einer stabilen Püreezusammensetzung, umfassend den Schritt des Zusetzens der gemäß irgendeinem der vorhergehenden Ansprüche hergestellten stabilisierten Fruchtpulpen-Zusammensetzung zu einer eine Verdickerbasis umfassenden Zusammensetzung, um eine stabile Püreezusammensetzung herzustellen.

8. Verfahren gemäß Anspruch 7, wobei das stabile Püree umfasst:
a) 20,0 bis 95,0 Gew.-% Wasser;
b) 0,01 bis 10,0 Gew.-% Verdickerbasis; und
c) 1 bis 75,0 Gew.-% Klumpen enthaltende stabilisierte Fruchtpulpen-Zusammensetzung, wobei die Klumpen Ausmaße von 1x1x1 mm bis 15x15x15 mm aufweisen,
wobei die Püreezusammensetzung eine Viskosität von 18 bis 30 Pa•s (18.000 bis 30.000 centipoise) und eine Lagerbeständigkeit bei etwa Umgebungstemperatur von mindestens 65 Tagen aufweist.

9. Verfahren gemäß Anspruch 7, wobei das stabile Püree umfasst:
a) 20,0 bis 95,0 Gew.-% Wasser;
b) 0,01 bis 10,0 Gew.-% Verdickerbasis; und
c) 1 bis 75,0 Gew.-% Klumpen enthaltende stabilisierte Fruchtpulpen-Zusammensetzung, wobei die Klumpen Ausmaße von 1x1x1 mm bis 15x15x15 mm aufweisen,
wobei die Püreezusammensetzung eine Viskosität von 5 bis 90 Pa•s (5.000 bis 90.000 centipoise) und eine Haltbarkeitsdauer bei etwa Umgebungstemperatur von mindestens 65 Tagen aufweist und wobei die Zusammensetzung einen pH-Wert von mindestens 3,0 bis weniger oder gleich 7,0 hat.

10. Verfahren gemäß irgendeinem der Ansprüche 7 bis 9, wobei die stabile Püreezusammensetzung als Salatsauce, Tunke, Aufstrich, Kochzusatz oder Backzusatz verwendet wird..

11. Verfahren gemäß irgendeinem der Ansprüche 7 bis 10, wobei die stabile Püreezusammensetzung ferner Nahrungsmittel-Aromastoff, Lebensmittelfarbstoff, Proteinpulver, Konservierungsmittel, Emulgiermittel, Säure, Gewürze, Texturisierungsmittel oder eine Mischung davon umfasst.

## Revendications

1. Procédé de fabrication d'une composition de pulpe de fruit stabilisée comprenant les étapes consistant :
(a) à récolter un fruit 1 à 4 semaines avant maturité ;
(b) à stocker le fruit récolté dans une chambre noire à une température de 10°C à 35°C pendant moins de 1,5 semaines ;
(c) dans aucun ordre particulier, à peler, épépiner ou dénoyauter, si nécessaire, le fruit et à couper ou écraser le fruit pour produire de la pulpe de fruit, la pulpe comprenant des morceaux ayant des dimensions de 1 x 1 x 1 mm à 15 x 15 x 15 mm ;
(d) à mélanger la pulpe de fruit avec de 0,01 à 5,0 % en poids d'acidulant pour produire un mélange de chair de fruit et d'acidulant ;
(e) à chauffer le mélange de chair de fruit et d'acidulant à une température d'au plus 90°C pendant moins de 4 minutes,
dans lequel le fruit présente un facteur de dureté d'au moins 300 dynes avant chauffage.

2. Procédé de fabrication d'une composition de pulpe de fruit stabilisée selon la revendication 1, dans lequel le fruit est l'avocat, la banane, la mangue, la goyave, la figue, la papaye, le kiwi, la carambole, l'ananas ou un mélange de ceux-ci, le fruit comprend de préférence l'avocat.

3. Procédé de fabrication d'une composition de pulpe de fruit stabilisée selon l'une quelconque des revendications 1 ou 2, dans lequel la composition de pulpe de fruit stabilisée comprend de 50,0 à 99,0 % en poids d'eau ; de la pulpe de fruit ; de 0,1 à 40,0 % en poids d'huile ; pratiquement aucune activité d'enzyme désavantageuse pour la qualité après chauffage.

4. Procédé selon la revendication 3, dans lequel la composition de pulpe de fruit stabilisée comprend de 75,0 à 99,0 % en poids d'eau ; de la pulpe de fruit ; de 0,1 à environ 20,0 % en poids d'huile.

5. Procédé selon l'une quelconque des revendications précédentes, dans lequel le fruit est soumis à des conditions de stockage d'humidité relative entre 40-70 % avant d'être-chauffé.

6. Procédé selon l'une quelconque des revendications précédentes, dans lequel les morceaux présentent des dimensions de 2 x 2 x 2 mm à 10 x 10 x 10 mm.

7. Procédé de fabrication d'une composition de purée stable, comprenant l'étape d'addition de la composition de pulpe de fruit stabilisée préparée selon l'une quelconque des revendications précédentes à une composition comprenant une base épaississante pour produire une composition de purée stable.

8. Procédé selon la revendication 7, dans lequel la purée stable comprend :
a) de 20,0 % à 95,0 % en poids d'eau ;
b) de 0,01 à 10,0 % en poids de base épaississante ; et
c) de 1 à 75,0 % en poids de composition de pulpe de fruit stabilisée comprenant des morceaux, lesdits morceaux ayant des dimensions de 1 x 1 x 1 mm à 15 x 15 x 15 mm,
dans lequel la composition de purée présente une viscosité de 18 à 30 Pa.s (18 000 à 30 000 centipoises), et une durée de conservation à environ la température ambiante d'au moins 65 jours.

9. Procédé selon la revendication 7, dans lequel la purée stable comprend :
a) de 20,0 % à 95,0 % en poids d'eau ;
b) de 0,01 à 10,0 % en poids de base épaississante ; et
c) de 1 à 75,0 % en poids de composition de pulpe de fruit stabilisée comprenant des morceaux, lesdits morceaux ayant des dimensions de 1 x 1 x 1 mm à 15 x 15 x 15 mm,
dans lequel la composition de purée présente une viscosité de 5 à 90 Pa.s (5 000 à 90 000 centipoises), et une durée de conservation à environ la température ambiante d'au moins 65 jours ; et dans lequel la composition présente un pH d'au moins 3,0 à moins de ou de 7,0.

10. Procédé selon l'une quelconque des revendications 7 à 9, dans lequel la composition de purée stable est utilisée comme une vinaigrette, une sauce, une pâte à tartiner, un additif de cuisson ou un additif de pâtisserie.

11. Procédé selon l'une quelconque des revendications 7 à 10, dans lequel la composition de purée stable comprend de plus un aromatisant de qualité alimentaire, un colorant de qualité alimentaire, une poudre de protéine, un conservateur, un émulsionnant, un acide, des épices, un agent texturant ou un mélange de ceux-ci.
